# EUROPÄISCHE PATENTSCHRIFT

(11) **EP 0 768 588 B1**
(45) Veröffentlichungstag und Bekanntmachung des Hinweises auf die Patenterteilung: **22.08.2001**
(21) Anmeldenummer: 96115267.5
(22) Anmeldetag: 24.09.1996
(51) Int. Cl.: G05D 3/20, B66C 23/90, E02F 9/26, G06F 3/023, G05B 19/409, E06C 5/36

(54) **Verfahren und interaktive Bedienkonsole zur Vorbereitung und Einrichtung eines mobilen Arbeitsgerätes**
Interactive operator console and method for preparation and adjustment of a mobile working apparatus
Console de commande et méthode de préparation et d'ajustement d'un engin mobile de travail

(30) Priorität: 13.10.1995 DE 19538264
(43) Veröffentlichungstag der Anmeldung: 16.04.1997
(73) Patentinhaber: PAT GmbH, 76275 Ettlingen (DE)
(72) Erfinder: Pietzsch, Heinz W., 76227 Karlsruhe (DE); Bronk, Hans, 76275 Ettingen (DE)
(74) Vertreter: Geitz, Heinrich, Dr.-Ing.

(56) Entgegenhaltungen:
- EP-A- 0 076 328
- EP-A- 0 275 192
- EP-A- 0 363 160
- EP-A- 0 424 686
- EP-A- 0 614 845
- WO-A-80/00076
- FR-A- 2 688 076
- US-A- 5 124 942

## Beschreibung

Die Erfindung betrifft ein Verfahren zur Vorbereitung und Einrichtung eines mobilen Arbeitsgerätes mit variablem Aufbau und/oder verschiedenen Funktionen für eine bevorstehenden Arbeitseinsatz, bei dem die jeweils gewünschte Konfiguration des Arbeitsgerätes mittels einer Serie von Entscheidungen herbeigeführt wird, wobei die Entscheidungsmöglichkeiten mittels einer interaktiven Bedienkonsole angezeigt werden und eine interaktive Bedienkonsole zur Vorbereitung und Einrichtung eines mobilen Arbeitsgerätes mit variablem Aufbau und/oder verschiedenen Funktionen für einen bevorstehenden Arbeitseinsatz, die mit einer Datenverabeitungsanlage verbunden ist, die mit einer Anzeige- und Bedieneinheit zur Anzeige von Entscheidungsgruppen und Eingäbemöglichkeiten zur Auswahl der gewünschten Konfiguration des Arbeitsgerätes sowie zur Vornahme der die Entscheidung repräsentierenden Eingaben in wechselseitiger Datenverbindung steht.

Ein derartiges Verfahren und eine derartige Vorrichtung sind aus der WO 80/00076 vorbekannt.

Aus dieser Veröffentlichung ist eine Bedienkonsole mit einer Reihe von Anzeigeblöcken, einer Eingabeeinheit, einer Tastatur, einer Beleuchtungseinheit sowie akkustischen Warneinheiten bekannt. Die Anzeigefunktionen dieser vorbekannten Bedienkonsole werden durch festehende Anzeigen sowie Segmentanzeigen erfüllt. Die Bedienkonsole als solche ist aus einem durchleuchtbaren Halbleiterwerkstoff gefertigt, wobei einzelne Merkmale der Bedienkonsole nur dann sichtbar werden, wenn diese Anzeigefunktionen entsprechend hinterstrahlt werden.

Die vorbekannte Bedienkonsole wird zur Steuerung und Einrichtung eines mobilen Arbeitsgerätes, wie beispielsweise eines Baustellenkrans in unterschiedlichen Auslegerkonfigurationen eingesetzt. Die Bedienkonsole zeigt nicht ständig sämtliche Informationen, sondern neben ständigen Statusfunktionen, wie beispielsweise einer Lastanzeige andere Einstellungen wie beispielsweise den Kranstatus nur bei Bedarf an. Hierdurch soll eine Informationsüberflutung des Benutzers vermieden werden.

Nachteilig bei der vorbekannten Bedienkonsole ist, daß die vorbekannte Bedienkonsole einigermaßen unübersichtlich ist, da zumindest sämtliche möglichen Anzeigen gerätetechnisch angelegt sind und somit die gesamte Bedienkonsole einigermaßen unübersichtlich ist. Selbst wenn immer nur einzelne Funktionen durch entsprechendes Hinterstrahlen aktiviert sind, muß dennoch die Bedienkonsole insgesamt vom jeweiligen Benutzer überblickt werden. Ein weiterer Nachteil der vorbekannten Bedienkonsole ist, daß die Konfiguration dieser Bedienkonsole genau auf das jeweilige Arbeitsgerät abgestimmt sein muß. Die relativ aufwendig herzustellende Bedienkonsole kann daher immer nur in Verbindung mit einem bestimmten Arbeitsgerät eingesetzt werden.

Hinsichtlich der Einrichtung von Arbeitsgeräten ist ferner aus dem US-Patent US 5,124,942 bekannt, einen hierarchischen Entscheidungsbaum abzuarbeiten. Hierzu wird in dem genannten US-Patent eine Benutzerschnittstelle vorgeschlagen, bei der im Wege von Ja/Nein-Entscheidungen sowie durch Parametrierung über ein Display, das mit einer Autoscroll-Funktion bedient wird eine Geräteeinrichtung möglich ist. Der Vorteil der Geräteeinrichtung mittels eines Entscheidungsgbaums liegt darin, daß an sich unübersichtliche Entscheidungsprozesse in Entscheidungsgruppen strukturiert werden, die dann in einer sinnvollen Reihenfolge abgearbeitet werden. Der möglicherweise mit dem Gesamtüberblick des Systems überforderte Benutzer kann somit ein aufwendiges Arbeitsgerät wie beispielsweise einen mobilen Baukran einrichten.

Dabei kann die aus der US 5,124,942 vorbekannte Benutzerschnittstelle aufgrund ihrer beschränkten Anzeige- und Eingabemöglichkeiten kaum zur Einrichtung aufwendiger Geräte eingesetzt werden.

Mobile Arbeitsgeräte weisen zumeist eine Vielzahl auf den jeweiligen Anwendungsfall abstimmbarer Aufbauten, Einstellungen und Vorrichtungen auf. So können beispielsweise bei Krananlagen die Länge des Auslegers oder die jeweilige Abstützung in Abhängigkeit von Standort, Traglast und weiterer Einflußparameter gewählt werden. Nachdem das mobile Arbeitsgerät entsprechend aufgebaut und eingerichtet ist, muß die zum Betrieb benötigte Leit- und Steuertechnik sowie eine Vielzahl weiterer Einstellungen in Abhängigkeit von dem jeweils gewählten Aufbau vom Bedienungspersonal vorgenommen werden, bevor der Betrieb aufgenommen wird. Die Richtigkeit dieser Einstellungen ist die Voraussetzung für eine störungsfreien Betrieb. Es muß demnach versucht werden, dem Benutzungspersonal möglichst umfassende Hilfsmittel an die Hand zu geben, die notwendigen Einstellungen schnell und korrekt auszuführen.

Eine erste Lösung dieser Aufgabe bestand darin, mobile Arbeitsgeräte in Verbindung mit entsprechenden umfänglichen Tabellenbüchern auszuliefern. Die jeweils erforderlichen Einstellungen konnten dann in Abhängigkeit von dem jeweiligen Aufbau, beispielsweise der jeweiligen Traglast, aus diesen Handbüchern herausgesucht und anschließend mit Hilfe der jeweiligen Stelleinrichtungen vorgenommen werden.

In Anbetracht dieses umständlichen und fehlerträchtigen Verfahrens lag es zunächst nahe, eine möglichst vollautomatische Vorbereitung und Einrichtung für mobile Arbeitsgeräte zu entwickeln. Hierzu hätte das gesamte in den Handbüchern tabellarisch geordnete Datenmaterial in entsprechenden Datenbanken abgelegt werden und jeweils in Abhängigkeit von den von einer Sensorik empfangenen Daten über den jeweiligen Aufbau abgerufen und in Abhängigkeit weiterer abgespeicherter Werte die entsprechenden Einstellungen selbsttätig vorgenommen werden müssen.

Diese Lösung hat sich aufgrund des bei der Erfassung aller Aufbauten notwendigen sensorischen Aufwands in der Praxis nur selten als günstig erwiesen. Aufgrund der in Verbindung mit derart vollautomatisch arbeitenden Anlagen üblichen Sicherheitsvorschriften muß bei Ausfall nur eines Sensors dieser Sensorik die gesamte Anlage stillgelegt werden.

Eine weitaus praktikablere Lösung wurde dann mit der Verwendung einer interaktiven Bedienkonsole geschaffen. Es handelt sich hierbei um eine Anzeige- und Bedieneinheit. Das Wort "interaktiv" steht hier dafür, daß die angezeigten Werte von den jeweils eingegebenen Parametern abhängen und umgekehrt. Diese Anzeige- und Bedieneinheit zeigt alle zur Vorbereitung und Einrichtung des mobilen Arbeitsgeräts notwendigen Parameter an und weist darüber hinaus Bedienelemente für alle notwendigen Eingaben auf. Eine zusätzliche Entscheidungshilfe für das Bedienpersonal ist dadurch gegeben, daß durch entsprechende Symbole die einzelnen Anzeigeelemente der Bedienkonsole erläutert sind. Im übrigen sind die Bedienelemente zur Vornahme von notwendigen Auswahlentscheidungen in sinnvollen Bediengruppen zusammengefaßt. Aufgrund dieser übersichtlichen Anordnung der interaktiven Bedienkonsole ist eine gewisse Benutzerführung gegeben. Eine derartige Konsole ist in der als "Operator's Handbook PAT DS 350" bezeichneten Bedienungseinleitung der Anmelderin ausführlich beschrieben.

Trotz aller Visualisierungshilfen und systematischer Ordnungen der Bedienelemente ist es auch bei einer solchen Bedienkonsole nicht zu vermeiden, daß der Benutzer stets mit einer momentan nicht zu verarbeitenden Informationsfülle konfrontiert ist. Außerdem müssen diese Bedienkonsolen stets ganz speziell auf den jeweiligen Typ des mobilen Arbeitsgerätes hinsichtlich der verwendeten Symbolik und Bediengruppeneinteilung genau abgestimmt sein, um die bestimmungsgemäße Übersichtlichkeit und Benutzerführung zu bieten.

Der Erfindung liegt daher die Aufgabe zugrunde, ein Verfahren und eine Bedienkonsole zur Vorbereitung und Einrichtung eines mobilen Arbeitsgerätes mit variablem Aufbau und/oder verschiedenen Funktionen zu schaffen, das bzw. die in Verbindung mit unterschiedlichen mobilen Arbeitsgeräten einsetzbar ist und überdies eine weiter verbesserte Benutzerführung bietet.

Diese Aufgabe wird durch ein Verfahren gelöst, bei dem ein Entscheidungsbaum über die gewünschte Konfiguration des Arbeitsgerätes derart abgearbeitet wird, daß alle notwendigen Entscheidungen über die jeweiligen Konfigurationsmöglichkeiten in Entscheidungsgruppen unterteilt und anschließend diese Entscheidungsgruppen nacheinander in einer vorbestimmten Reihenfolge auf einer interaktiven Bedienkonsole angezeigt werden.

Bei diesem Verfahren ist die Benutzerführung dadurch deutlich verbessert, daß die Summe aller möglichen Entscheidungen und Eingaben des Anwenders in einzelne Entscheidungsgruppen gegliedert ist und auch in dieser Weise zur Anzeige gebracht wird. Die einzelnen Entscheidungsgruppen werden dabei stets in einer sinnvollen Reihenfolge angezeigt und abgefragt.

Die bisher übliche Informationsüberflutung des Benutzers durch eine Vielzahl von Instrumenten und unterschiedlichen Anzeigewerten wird dadurch vermieden, daß jeweils nur eine Entscheidungsgruppe angezeigt wird.

In vorteilhafter Weiterbildung werden die einzelnen Entscheidungsgruppen durch entsprechende Piktogramme visualisiert. Hierdurch wird eine schnelle Informationsaufnahme sowie ein Wiedererkennungseffekt beim Benutzer erzielt.

Das Verfahren kann jeweils genau auf den Typus des mobilen Arbeitsgeräts sowie den jeweiligen Anwendungsfall abgestimmt sein. Der Benutzer enthält dann nur die in seinem Spezialfall notwendigen Informationen und muß demnach auch nur die in seinem Fall möglichen und notwendigen Entscheidungen treffen.

Bei einer weiter verbesserten Ausführungsform des Verfahrens werden auch die bei der Durchführung des Verfahrens vom Anwender vorgenommenen Eingaben im weiteren Verfahren berücksichtigt. Dies ist insbesondere dann sinnvoll, wenn aufgrund vorausgegangener Entscheidungen nachfolgende Entscheidungsgruppen eingeschränkt oder sonstig verändert werden. Hiermit ist eine echte Interaktivität der Bedienkonsole beschrieben.

Eine abschließende Übersichtsdarstellung in Form einer Gesamtübersicht oder einer sequentiellen Darstellung der Entscheidungen gibt dem Anwender eine zusätzliche Kontrollmöglichkeit über die von ihm vorgenommenen Einstellungen. Die Betriebssicherheit und Benutzerfreundlichkeit des Verfahrens ist hierdurch erhöht.

Die der Erfindung zugrundeliegende Aufgabe wird auch mit einer interaktiven Bedienkonsole zur Durchführung des Verfahrens zur Vorbereitung und Einrichtung eines mobilen Arbeitsgerätes mit variablem Aufbau und/oder verschiedenen Funktionen für einen bevorstehenden Arbeitseinsatz gelöst, die mit einer Datenverarbeitungsanlage verbunden ist, die mit einer Anzeige- und Bedieneinheit zur variablen Anzeige der jeweiligen Entscheidungsgruppe und Eingabemöglichkeiten zur Auswahl der gewünschten Konfiguration des Arbeitsgerätes sowie zur Vornahme der die Entscheidung repräsentierenden Eingaben in wechselseitiger Datenverbindung steht.

Eine derartige Bedienkonsole kann in Verbindung mit unterschiedlichsten mobilen Arbeitsgeräten eingesetzt werden. Die Anzeige- und Bedienelemente können optimal auf den jeweiligen Anwendungsfall des speziellen Arbeitsgerätes abgestimmt sein, ohne daß für jedes Arbeitsgerät deshalb eine spezielle Bedienkonsole entwickelt werden müßte. Es genügt, eine entsprechende Software in der Datenverarbeitungsanlage zu aktivieren.

In besonders vorteilhafter Ausgestaltung der Erfindung ist die Bedienkonsole mit einem variabel ansteuerbaren graphikfähigen LCD-Display versehen, das einige Funktionstasten aufweist, die unterschiedlich belegbar sind. Die Anzeige kann damit je nach Ansteuerung speziell auf den vorliegenden Einzelfall abgestimmt werden. Falls die Bedienkonsole in Verbindung mit einem anderen Arbeitsgerät eingesetzt werden soll, muß lediglich die zur Ansteuerung der Anzeige in der Datenverarbeitungsanlage abgespeicherte Software entsprechend geändert werden. Hierzu können beispielsweise zusätzliche oder andere Softwaremodule aktiviert werden. Darüber hinaus ist gemäß dieser Ausführung nicht für jede Eingabe ein spezielles Eingabeelement vorgesehen, sondern die in Verbindung mit dem Display zur Verfügung stehenden Funktionstasten können je nach Anwendung und anstehender Entscheidung unterschiedlich belegt werden. Infolgedessen ist die Anzahl der zur Vorbereitung und Einrichtung des Arbeitsgerätes notwendigen Bedienelemente drastisch reduziert. Die Übersichtlichkeit der Bedieneinheit ist hierdurch bei. gleichzeitig vermindertem Platzbedarf deutlich verbessert.

Gemäß Anspruch 9 können darüber hinaus zusätzliche Anzeige- und/oder Bedienelemente vorgesehen sein, die unabhängig von der momentanen Ansteuerung zur Verfügung stehen. Auf diese Weise kann sichergestellt sein, daß sicherheitsrelevante Anzeigen und/oder Eingaben ständig möglich sind. Beispielsweise kann eine entsprechende Alarmanzeige und eine Unterbrechungstaste in Verbindung mit der Anzeige- und Bedieneinheit vorgesehen sein.

Gemäß Anspruch 10 wird die Anzeige- und Bedieneinheit von einer Datenverarbeitungsanlage in Abhängigkeit von den mittels einer entsprechenden Sensorik empfangenen Daten, der fest einprogrammierten Parametern des Arbeitsgerätes derart angesteuert, daß die zur Einrichtung und Vorbereitung des Arbeitsgerätes notwendigen Entscheidungen in Form von Entscheidungsgruppen angezeigt und gemäß einem fest einprogrammierten Entscheidungsbaum zur Anzeige gelangen. Durch das Zusammenwirken von Datenverarbeitungsanlage und Sensorik mit der Anzeige- und Bedieneinheit ist sichergestellt, daß nur die jeweils momentan relevanten Entscheidungsmöglichkeiten zur Anzeige gelangen und über die entsprechenden Funktionstasten auswählbar sind. Der Benutzer wird auf diese Weise sicher durch die im Zusammenhang mit der Konfiguration des mobilen Arbeitsgerätes notwendigen Entscheidungen geführt.

Dadurch, daß die Datenverarbeitungsanlage programmierbar ist, kann die interaktive Bedienkonsole in optimaler Weise auf das jeweilige Arbeitsgerät und die potentiellen Einsatzgebiete abgestimmt werden. Auf diese Weise ist auch eine nachträgliche Modifikation der interaktiven Bedienkonsole beispielsweise im Zusammenhang mit einer Modernisierung oder Veränderung des Arbeitsgerätes möglich. Die Möglichkeit der Programmierung kann dabei auch durch eine entsprechende Schnittstelle der Datenverarbeitungsanlage gegeben sein. Durch den Austausch entsprechender Module können mit einer interaktiven Bedienkonsole auch mehrere unterschiedliche mobile Arbeitsgeräte betrieben werden.

Dabei ist es vorteilhaft, wenn zumindest die Datenverarbeitungsanlage trennbar mit dem mobilen Arbeitsgerät verbunden ist. In diesem Falle können mit einer Datenverarbeitungsanlage mehrere mobile Arbeitsgeräte betrieben werden. Es ist allerdings auch denkbar, daß jeweils die gesamte interaktive Bedienkonsole aus dem Arbeitsgerät herausgenommen wird, um anschließend in Verbindung mit dem gleichen oder einem anderen Arbeitsgerät eingesetzt zu werden.

Mittels einer entsprechenden Vergleichseinrichtung der Datenverarbeitungsanlage kann darüber hinaus sichergestellt sein, daß beim Aufbau der gewünschten Gerätekonfigurationen die erforderlichen Norm- und/oder Sicherheitsvorschriften beachten werden.

Die interaktive Bedienkonsole kann für den Fall von Fehlkonfigurationen mit zusätzlichen Alarmeinrichtungen gekoppelt sein.

Nachstehend wird anhand eines in der Zeichnung nur schematisch dargestellten Ausführungsbeispieles die Erfindung erläutert. Es zeigen:
- Fig. 1: eine interaktive Bedienkonsole im Blockschaltbild,
- Fig. 2: einen mobilen Baustellenkran in einer Seitenansicht,
- Fig. 3: eine Anzeige- und Bedieneinheit der Bedienkonsole bei der Anzeige einer Entscheidungsgruppe in einer Frontansicht,
- Fig. 4: eine Anzeige- und Bedieneinheit die in Fig. 3 bei der Anzeige einer Übersichtsdarstellung und
- Fig. 5: das Verfahren zur Vorbereitung und Einrichtung des Baustellenkrans in einem Flußdiagramm.

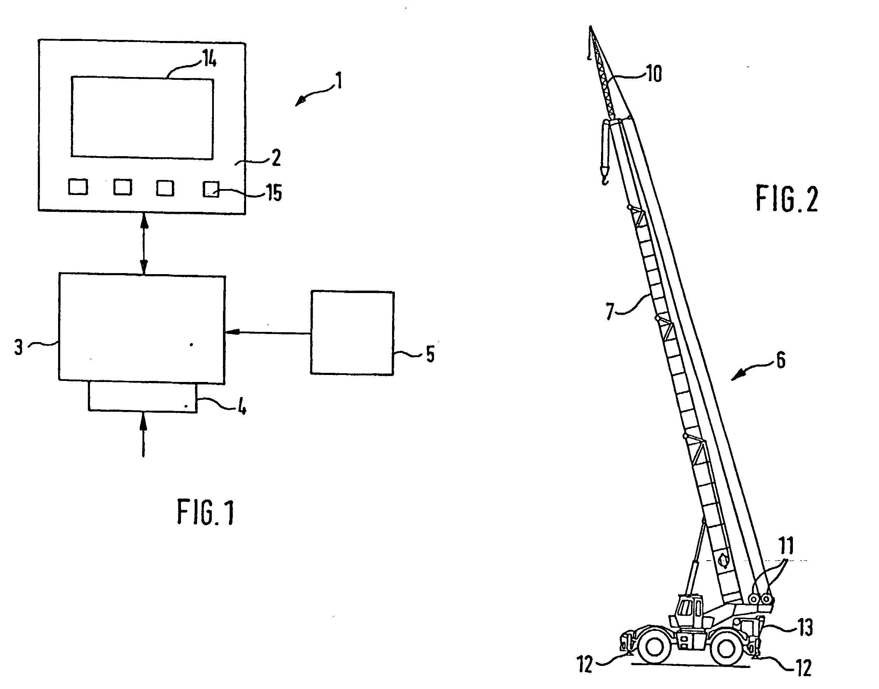

Die in Fig. 1 dargestellte interaktive Bedienkonsole 1 besteht aus einer Anzeige- und Bedieneinheit 2 mit angeschlossener Datenverarbeitungsanlage 3, die eine Schnittstelle 4 zum Anschluß weiterer Geräte, wie beispielsweise in der Zeichnung nicht dargestellter Eingabeeinrichtungen versehen ist. Darüber hinaus steht die Datenverarbeitungsanlage 3 mit einer Sensorik 5 zur Erfassung relevanter Meßdaten in Signalverbindung. Die Datenverarbeitungsanlage 3 umfaßt zumindest eine in der Zeichnung nicht dargestellte Prozessor- und Speichereinheit.

Die interaktive Bedienkonsole 1 wird zur Einrichtung und Vorbereitung eines Baustellenkrans nach Fig. 2 mit variablen Aufbauten und Funktionen eingesetzt.

So weist der Baustellenkran ein Ausleger 7 mit variabler Länge und variablem Winkel auf. Darüber hinaus kann der Ausleger 7 mit unterschiedlichen Spitzen 10 versehen werden. Der Ausleger 7 kann weiter in Verbindung mit verschiedenen Winden 11 betrieben werden. In Abhängigkeit von diesen nur beispielhaft angegebenen Konfigurationsmerkmalen des Baustellenkrans 6 müssen anschließend weitere Konfigurationen wie eine Abstützung 12 oder ein geeignetes Gegengewicht 13 des Baustellenkrans 6 gewählt werden.

Die Anzeige- und Bedieneinheit 2 ist ein graphikfähiges LCD-Display mit einer Flüssigkeitskristallanzeige 14 und unterschiedlich belegbaren Funktionstasten 15. Zusätzlich weist das Display einige fest verdrahtete Anzeigeinstrumente 16 und Bedientasten 18 auf. Es handelt sich hierbei in erster Linie um Alarm- oder Betriebsunterbrechungsanzeigen.

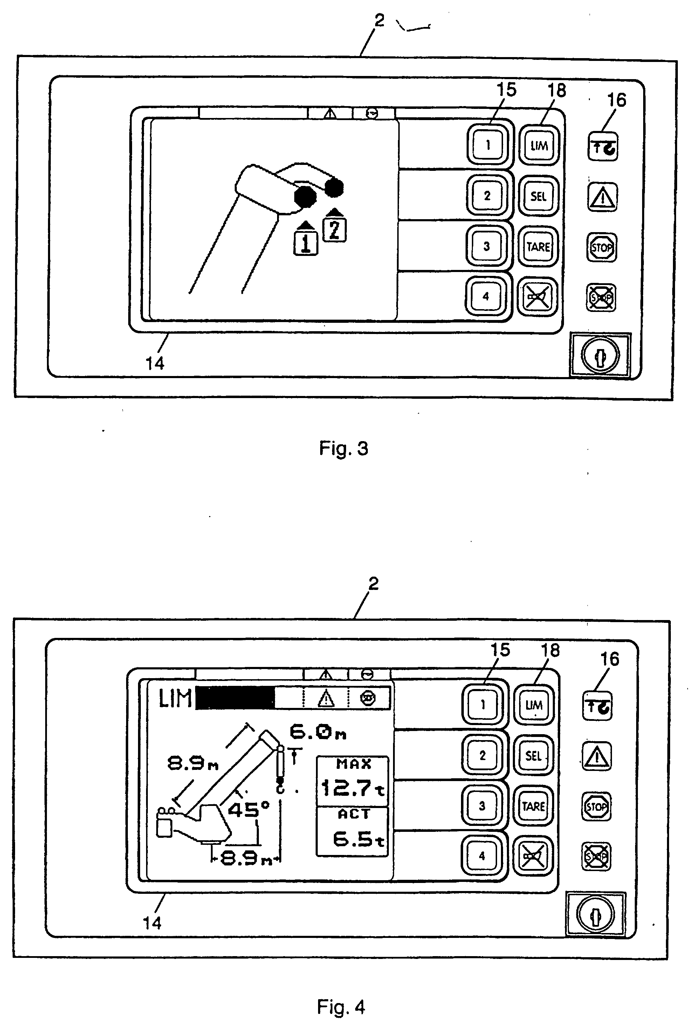

Der Baustellenkran 6 wird für den Arbeitseinsatz derart vorbereitet, daß alle möglichen Konfigurationen des Baustellenkrans 6 in Entscheidungsgruppen 21, 22, ..., 29 zusammengefaßt und in der Datenverarbeitungsanlage 3 abgelegt sind. Darüber hinaus sind alle für die Einrichtung des Baustellenkrans 6 notwendigen Daten, wie beispielsweise entsprechende Traglasttabellen in der Datenverarbeitungsanlage 3 abgelegt. Darüber hinaus wird die Datenverarbeitungsanlage 3 ständig mit den von der angeschlossenen Sensorik 5 erfaßten Meßwerten gespeist. In Abhängigkeit von all diesen Informationen werden dem Benutzer die einzelnen Entscheidungsgruppen 21, 22, ..., 29 gemäß einem fest einprogrammierten Entscheidungsbaum in sinnvoller Reihenfolge und ansprechender Visualisierung auf dem LCD-Display zur Entscheidung angeboten. So zeigt beispielsweise Fig. 3 die dem Benutzer im Falle einer Entscheidung für einen Ausleger 7 ohne Auslegerspitze 10 zur Auswahl möglichen Rollen an. Es handelt sich dabei um eine Hauptrolle 17 und eine Zusatzrolle 20, von denen jeweils eine mittels der entsprechend belegbaren Funktionstasten 15 ausgewählt werden kann. Auf diese Weise wird der Benutzer in einem entsprechenden Menü durch die in Verbindung mit der Einrichtung des Baustellenkrans 6 notwendigen Entscheidungen geführt. Nachdem alle zur Einrichtung des Baustellenkrans 6 notwendigen Entscheidungen getroffen sind, kann der Benutzer auf Abruf sich in einer Gesamtübersicht 31, die in Fig. 4 dargestellt ist, nochmals über die von ihm gewählte bzw. eingegebene Konfiguration informieren. Er kann anschließend entweder sein Einverständnis mit der gewählten Konfiguration geben oder aber einzelne Entscheidungen wiederholen. Sollten infolge der korrigierten Entscheidungen auch andere Entscheidungen in Frage gestellt werden, werden die dann nachzuholenden Entscheidungen der Benutzer erneut zur Auswahl angeboten.

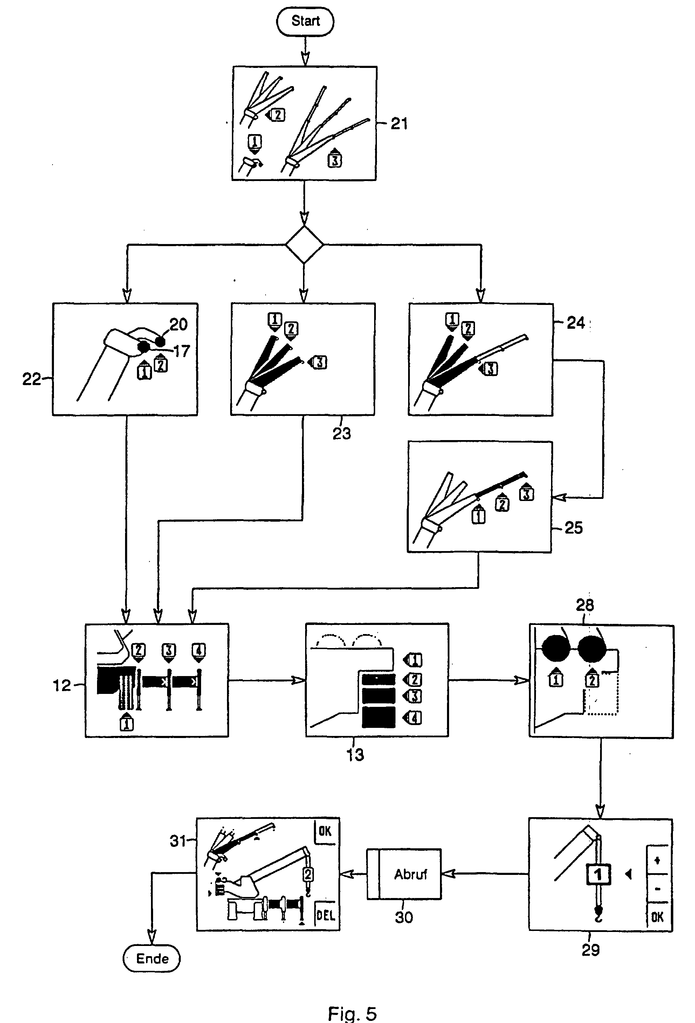

Die Vorbereitung und Einrichtung des Baustellenkrans 6 mittels der interaktiven Bedienkonsole 11 gemäß einem in der Datenverarbeitungsanlage 3 abgelegten Entscheidungsbaum wird in Fig. 5 in einem Flußdiagramm mittels der dem Benutzer auf der Anzeige- und Bedieneinheit 2 üblicherweise dargebotenen Visualisierungen näher erläutert. Nach dem Start des Benutzermenüs kann der Benutzer in einer ersten Entscheidung zunächst über die gewünschte Auslegerspitze 10 entscheiden. Hierzu wird dem Benutzer eine erste Entscheidungsgruppe 21 mit entsprechender Belegung der Funktionstasten 15 angeboten. In Abhängigkeit von der vom Benutzer getroffenen Entscheidung werden dem Benutzer weitere Entscheidungsgruppen 22, 23 und 24 angeboten. Es handelt sich hierbei bei einem Ausleger 7 ohne Spitze 10 um die Entscheidung über die verwendeten Rollen 17 oder 20 bei einer herkömmlichen Auslegerspitze 10 um die Entscheidungsgruppe 23 über den Winkel und im Falle einer Entscheidung für einen Teleskopausleger um die Entscheidungsgruppe 23 über den Winkel des Teleskopauslegers. Die Entscheidung der Gruppe 24 über den Winkel des Teleskopauslegers muß durch eine weitere Entscheidungsgruppe 25 über die Länge des Teleskopauslegers ergänzt werden. Nach all diesen Entscheidungen 21, 22, 23, 24 und 25 über den Ausleger 7 wird die Entscheidungsgruppe 26 für eine geeignete Abstützung 12 angeboten. In Abhängigkeit von der Entscheidung 26 über die geeignete Abstützung 12 kann in einer weiteren Entscheidung 27 über das geeignete Gegengewicht 13 entschieden werden. Anschließend wird dem Benutzer die Entscheidungsgruppe 28 über die in Verbindung mit der bisher gewählten Konfiguration einzusetzende Winde 11 angeboten. Schließlich wird in einer letzten Entscheidung 29 über die Seileinscherung entschieden. Bei dieser Entscheidung wird darüber befunden mit wieviel Umschlingungen das Traglastseil über die Auslegerrolle geführt wird. Schließlich kann nochmals mittels eines entsprechenden Abrufs 30 eine Gesamtübersicht 31 über die gewählte Konfiguration abgerufen werden. Falls der Benutzer der in der Gesamtübersicht 30 gezeigten Konfiguration zustimmt ist der Baustellenkran 6 genau den eingegebenen Vorgaben entsprechend eingerichtet.

Alle Visualisierungen und angebotenen Entscheidungsgruppen sind genau auf den speziellen Typ des Baustellenkrans 6 abgestimmt. Durch eine entsprechend andere Programmierung der in der Datenverarbeitungsanlage 3 befindlichen Speichereinheit, die beispielsweise auch nachträglich über die Schnittstelle 4 erfolgen kann, kann das Verfahren zur Vorbereitung und Einrichtung auch auf einen anderen Typus Baustellenkran 6 oder auf ein anderes Arbeitsgerät genau abgestimmt werden. Auf diese Weise können auch bei einer nachträglichen Änderung des Baustellenkrans 6 beispielsweise durch nachträgliche Ausrüstung mit einer vorher nicht vorhandenen Sensorik 5, entsprechende Veränderungen der zu bearbeitenden Datenmenge vorgenommen werden. Bei der Datenverarbeitungsanlage 3 können auch unterschiedliche Programmodule für unterschiedliche Arbeitsgeräte abgelegt sein, die dann bei Bedarf aktiviert werden.

Mit dem genannten Verfahren und der zur Durchführung des Verfahrens geeigneten Bedienkonsole 1 ist ein vielseitig einsetzbares Instrumentarium zur Vorbereitung und Einrichtung unterschiedlichster Arbeitsgeräte 6 beschrieben. Darüber hinaus ist eine derart verbesserte Benutzerführung bei der Vorbereitung und Einrichtung der Baustellengeräte beschrieben, daß auch komplizierteste Konfigurationen fehlerfrei und in Übereinstimmung mit den geltenden Sicherheitsvorschriften von dem gewöhnlichen Betriebspersonal vorgenommen werden können.

## Patentansprüche

1. Verfahren zur Vorbereitung und Einrichtung eines mobilen Arbeitsgerätes (6) mit variablem Aufbau und/oder verschiedenen Funktionen für eine bevorstehenden Arbeitseinsatz, bei dem die jeweils gewünschte Konfiguration des Arbeitsgerätes (6) mittels einer Serie von Entscheidungen herbeigeführt wird, wobei die Entscheidungsmöglichkeiten mittels einer interaktiven Bedienkonsole (1) angezeigt werden,
dadurch gekennzeichnet, daß
die Serie von Entscheidungen über einen Entscheidungsbaum derart abgearbeitet wird, daß alle notwendigen Entscheidungen über die jeweiligen Konfigurationsmöglichkeiten in Entscheidungsgruppen (21, 22, ..., 29) unterteilt und anschließend diese Entscheidungsgruppen (21, 22, ..., 29) nacheinander in einer vorbestimmten Reihenfolge auf einer interaktiven Bedienkonsole; (1) angezeigt werden, wobei die in Verbindung mit einer Entscheidungsgruppe angezeigten Entscheidungsmöglichkeiten von den zuvor getroffenen Entscheidungen und/oder Eingaben abhängen.

2. Verfahren nach Anspruch 1, bei dem jeweils nur die aktuelle Entscheidungsgruppe (21, 22, ..., 29) angezeigt wird.

3. Verfahren nach Anspruch 2, bei dem die einzelnen Entscheidungsgruppen (21, 22, ..., 29) zusätzlich durch die Anzeige jeweils geeigneter Piktogramme visualisiert werden.

4. Verfahren nach einem der Ansprüche 1 bis 3, bei dem die Reihenfolge der jeweils zur Entscheidung angebotenen Entscheidungsmöglichkeiten von den im Einzelfall jeweils relevanten Parametern, insbesondere dem jeweiligen Arbeitsgerät (6), abhängt.

5. Verfahren nach einem der Ansprüche 1 bis 4, bei dem nach der letztmöglichen Entscheidung sequentiell und/oder in einer Gesamtübersicht (31) alle zuvor getroffenen Entscheidungen oder Eingaben und/oder die resultierenden Einstellungen des mobilen Arbeitsgerätes (6) angezeigt werden.

6. Interaktive Bedienkonsole zur Durchführung des Verfahrens nach Anspruch 1 zur Vorbereitung und Einrichtung eines mobilen Arbeitsgerätes mit variablem Aufbau und/oder verschiedenen Funktionen für einen bevorstehenden Arbeitseinsatz, die mit einer Datenverabeitungsanlage verbunden ist, die mit einer Anzeige- und Bedieneinheit zur Anzeige von Entscheidungsgruppen und Eingabemöglichkeiten zur Auswahl der gewünschten Konfiguration des Arbeitsgerätes sowie zur Vornahme der die Entscheidung repräsentierenden Eingaben in wechselseitiger Datenverbindung steht,
dadurch gekennzeichnet, daß
die interaktive Bedienkonsole (1) mit einer Anzeigeund Bedieneinheit (2) versehen ist, die als solche veränderlich ist, und hierdurch eine von der Abarbeitung des Entscheidungsbaumes abhängige und veränderliche Anzeige der innerhalb einer Entscheidungsgruppe (21, 22,..., 29) angebotenen Entscheidungsmöglichkeiten erfolgt.

7. Interaktive Bedienkonsole nach Anspruch 6, dadurch gekennzeichnet, daß die Anzeige- und Bedieneinheit (2) ein grafikfähiges LCD-Display (14) mit mehreren unterschiedlich belegbaren Funktionstasten (15) ist.

8. Interaktive Bedienkonsole nach Anspruch 7, dadurch gekennzeichnet, daß die Anzeige- und Bedieneinheit (2) einige zusätzliche fest verdrahtete Anzeige- und/oder Bedienelemente (16, 18) aufweist.

9. Interaktive Bedienkonsole nach einem der Ansprüche 6 bis 8, dadurch gekennzeichnet,
- daß die Datenverarbeitungsanlage (3) mit einer Sensorik (15) zur Erfassung des Istzustandes des mobilen Arbeitsgerätes (6) und etwaiger Einflußparameter in Signalverbindung steht,
- daß in einer Speichereinrichtung der Datenverarbeitungsanlage (3) zumindest alle zur Vorbereitung und Einrichtung des jeweiligen mobilen Arbeitsgerätes (6) notwendigen speziellen Informationen, insbesondere Traglasttabellen, gespeichert sind und
- daß alle zur Vorbereitung und Einrichtung des jeweiligen mobilen Arbeitsgerätes (6) möglichen Eingaben und/oder Entscheidungen in Gruppen (21, 22, ..., 29) zusammengefaßt in der Speichereinrichtung abgespeichert und gemäß einem programmierten Entscheidungsbaum abrufbar sind und
- daß die Datenverarbeitungsanlage (3) die Anzeige- und Bedieneinheit (2) gemäß der einprogrammierten Vorgaben, der von der Sensorik (15) empfangenen Daten und der eingegebenen Parameter derart ansteuert,
- daß die einzelnen Entscheidungsgruppen (21, 22, ..., 29) mit der jeweils zugehörigen Belegung der Funktionstasten (15) zur Anzeige gelangen.

10. Interaktive Bedienkonsole nach Anspruch 9, dadurch gekennzeichnet, daß die Datenverarbeitungsanlage (3) programmierbar ist.

11. Interaktive Bedienkonsole nach Anspruch 10, dadurch gekennzeichnet, daß zumindest die Datenverarbeitungsanlage (3) trennbar mit dem mobilen Arbeitsgerät (6) verbunden ist.

12. Interaktive Bedienkonsole nach Anspruch 9, dadurch gekennzeichnet, daß die Datenverarbeitungsanlage (3) eine Vergleichseinrichtung zum Vergleich der von der Sensorik (15) ermittelten und/oder fest einprogrammierten Daten, insbesondere aus Norm- oder Sicherheitsvorschriften, mit den Eingabedaten aufweist.

13. Interaktive Bedienkonsole nach einem der vorhergehenden Ansprüche, dadurch gekennzeichnet, daß die Datenverarbeitungsanlage (3) zusätzlich mit einer akustischen Alarmeinrichtung gekoppelt ist.

## Claims

1. Method of preparing and equipping a mobile work machine (6) with variable construction and/or different functions for an imminent task, in which the respectively desired configuration of the work machine (6) is brought about by means of a series of decisions, wherein the decision possibilities are displayed by means of an interactive control panel (1), characterised in that the series of decisions is processed by means of a decision tree in such a manner that all necessary decisions about the respective configuration possibilities are subdivided into decision groups (21, 22, ..., 29) and subsequently these decision groups (21, 22, ..., 29) are displayed on an interactive control panel (1) in a predetermined sequence, wherein the decision possibilities displayed in connection with a decision group depend on the decisions and/or inputs previously made.

2. Method according to claim 1, in which only the actual decision group (21, 22, ..., 29) is displayed on each occasion.

3. Method according to claim 2, in which the individual decision groups (21, 22, ..., 29) are additionally visualised by the display of a respectively suitable pictogram.

4. Method according to one of claims 1 to 3, in which the sequence of the decision possibilities respectively offered for decision depends on the parameters, particularly the respective work machine (6), respectively relevant in the individual case.

5. Method according to one of claims 1 to 4, in which after the last possible decision all decisions or inputs previously made and/or the resulting settings of the mobile work machine (6) are displayed sequentially and/or in a general overview (31).

6. Interactive control panel for carrying out the method according to claim 1, for preparing and equipping a mobile work machine with variable construction and/or different functions for an imminent task, which panel is connected with a data processor disposed in reciprocal data connection with a display and control unit for display of decision groups and input possibilities for selection of the desired configuration of the work machine and for carrying out the inputs representing the decision, characterised in that the interactive control panel (1) is provided with a display and control unit (2), which is variable as such, and a display, which is dependent on the processing of the decision tree and is variable, of the decision possibilities offered within a decision group (21, 22, ..., 29) is thereby carried out.

7. Interactive control panel according to claim 6, characterised in that the display and control unit (2) is a graphical LCD display (14) with several function keys (15) able to be employed in different manner.

8. Interactive control panel according to claim 7, characterised in that the display and control unit (2) comprises several additional fixedly connected display and/or control elements (16, 18).

9. Interactive control panel according to one of claims 6 to 8, characterised in that
- the data processor (3) is connected in terms of signal with a sensor system (15) for detection of the actual state of the mobile work machine (6) and possible influencing parameters,
- at least all specific data, particularly load capacity tables, needed for preparation and equipping of the respective mobile work machine (6) are stored in a storage device of the data processor (3) and
- all inputs and/or decisions possible for the preparation and equipping of the respective mobile work machine (6) are stored combined into groups (21, 22, ..., 29) in the storage device and can be called up in accordance with a programmed decision tree and
- the data processor (3) controls the display and control unit (2) in accordance with the programmed presets, the data received by the sensor system (15) and the input parameters in such a manner.
- that the individual decision groups (21, 22, ..., 29) are brought to display by the respectively associated employment of the function keys (15).

10. Interactive control panel according to claim 9, characterised in that the data processor (3) is programmable.

11. Interactive control panel according to claim 10, characterised in that at least the data processor (3) is separably connected with the mobile work machine (6).

12. Interactive control panel according to claim 9, characterised in that the data processor (3) comprises a comparison device for comparison of the data ascertained by the sensor system (15) and/or fixedly programmed data, particularly consisting of standard or safety specifications, with the input data.

13. Interactive control panel according to one of the preceding claims, characterised in that the data processor (3) is additionally coupled with an acoustic alarm device.

## Revendications

1. Procédé de préparation et d'ajustement d'un engin de travail mobile (6) d'une construction variable et/ou de fonctions différentes pour une utilisation prévue pour le travail, où la configuration respectivement recherchée de J'appareil de travail (6) est entraînée au moyen d'une série de décisions, où les possibilités de décision sont indiquées au moyen d'une console de commande interactive (1), caractérisé en ce que la série de décisions est déroulée par un arbre de décisions de telle sorte que toutes les décisions requises sont subdivisées par les possibilités de configuration respectives en groupes de décisions (21, 22, ..., 29) et que ces groupes de décision (21, 22, ..., 29) sont ensuite affichés les uns après les autres selon un ordre prédéterminé sur une console de commande interactive (1), où les possibilités de décision indiquées en rapport avec un groupe de décisions dépendent des décisions et/ou entrées prises ou faites avant.

2. Procédé selon la revendication 1, dans lequel est affiché à chaque fois seulement le groupe de décisions actuel (21, 22, ..., 29).

3. Procédé selon la revendication 2, où les différentes groupes de décisions (21, 22, ..., 29) sont visualisés additionnellement par l'indication d'icônes respectivement appropriées.

4. Procédé selon l'une des revendications 1 à 3, où l'ordre des possibilités de décision offertes à chaque fois pour la décision dépend des paramètres respectivement importants dans le cas individuel, notamment de l'engin de travail respectif (6).

5. Procédé selon l'une des revendication 1 à 4, dans lequel sont affichées après la dernière décision possible, séquentiellement et/ou en une vue d'ensemble (31), toutes les décisions ou entrées prises ou faites avant et/ou les réglages qui en résultent de l'engin de travail mobile (6).

6. Console de commande interactive pour l'exécution du procédé selon la revendication 1 pour la préparation et l'ajustement d'un engin mobile de travail d'une construction variable et/ou de fonctions différentes pour une utilisation prévue pour le travail, qui est reliée à une installation de traitement de données, qui est en liaison de données mutuelle avec une unité d'indication et de commande pour l'indication de groupes de décisions et de possibilités d'entrée pour sélectionner la configuration souhaitée de l'appareil de travail et pour effectuer les entrées représentant la décision, caractérisée en ce que la console de commande interactive (1) est équipée d'une unité d'indication et de commande (2) qui, en tant que telle, peut être modifiée, et que de ce fait a lieu une indication dépendant du déroulement de l'arbre de décisions et modifiable des possibilités de décision offertes à l'intérieur d'un groupe de décisions (21, 22, ..., 29).

7. Console de commande interactive selon la revendication 6, caractérisée en ce que l'unité d'indication et de commande (2) est un affichage à cristaux liquides (14) apte à exécuter des graphiques avec plusieurs touches de fonction (15) pouvant être affectées différemment.

8. Console de commande interactive selon la revendication 7, caractérisée en ce que l'unité d'indication et de commande (2) présente quelques éléments d'indication et/ou de commande additionnels (16, 18) câblés fixement.

9. Console de commande interactive selon l'une des revendications 6 à 8, caractérisée
- en ce que l'installation de traitement des données (3) est en liaison par signaux avec un ensemble de capteurs (15) pour détecter l'état réel de l'engin mobile de travail (6) et d'éventuels paramètres d'influence,
- en ce que sont stockées dans une installation de stockage de l'installation de traitement de données (3) au moins toutes les informations spéciales requises pour la préparation et l'ajustement de l'engin mobile de travail respectif (6), notamment des tableaux de charge et
- en ce que toutes les entrées et/ou décisions possibles pour la préparation et l'ajustement de l'engin mobile de travail respectif (6) sont stockées toutes ensemble dans l'installation de stockage et peuvent être appelées selon un arbre de décisions programmé et
- en ce que l'installation de traitement de données (3) commande l'unité d'indication et de commande (2) selon les consignes programmées, les données reçues par l'ensemble des capteurs (15) et les paramètres entrés de façon
- que les groupes de décisions individuels (21, 22, ..., 29), avec l'occupation respectivement associée des touches de fonction (15) sont affichés.

10. Console de commande interactive selon la revendication 9, caractérisée en ce que l'installation de traitement de données (3) est programmable.

11. Console de commande interactive selon la revendication 10, caractérisée en ce qu'au moins l'installation de traitement de données (3) est reliée amoviblement à l'engin mobile de travail (6).

12. Console de commande interactive selon la revendication 9, caractérisée en ce que l'installation de traitement de données (3) présente une installation de comparaison pour la comparaison des données détectées par l'ensemble des capteurs (15) et/ou programmées fixement, notamment des prescriptions standard ou de sécurité, avec les données entrées.

13. Console de commande interactive selon l'une des revendications précédentes, caractérisée en ce que l'installation de traitement de données (3) est couplée additionnellement à une installation d'alarme acoustique.
